# EUROPÄISCHE PATENTSCHRIFT

(11) **EP 1 892 424 B1**
(45) Veröffentlichungstag und Bekanntmachung des Hinweises auf die Patenterteilung: **17.12.2014**
(21) Anmeldenummer: 07113580.0
(22) Anmeldetag: 01.08.2007
(51) Int. Cl.: F16B 13/06, F16B 13/08

(54) **Spreizdübel**
Expansion anchor
Cheville à expansion

(30) Priorität: 23.08.2006 DE 102006000413
(43) Veröffentlichungstag der Anmeldung: 27.02.2008
(73) Patentinhaber: HILTI Aktiengesellschaft, 9494 Schaan (LI)
(72) Erfinder: Wieser, Jürgen, 86916, Kaufering (DE); Doppelbauer, Thomas, 6800, Feldkirch (AT); Martin, Simon, 6811, Göfis (AT)
(74) Vertreter: Hilti Aktiengesellschaft Corporate Intellectual Property

(56) Entgegenhaltungen:
- EP-B1- 0 790 414
- EP-B1- 1 411 251
- DE-A1- 4 123 353
- DE-A1- 10 118 374
- DE-U1- 29 917 678

## Beschreibung

Die Erfindung betrifft einen Spreizdübel mit einem Ankerbolzen und mit einer Spreizhülse. Der Ankerbolzen weist an einem ersten Endbereich ein Lastangriffsmittel und an einem zweiten Endbereich ein Spreizteil mit einem sich in Richtung des freien Endes des zweiten Endbereichs des Ankerbolzens erweiternden konischen Abschnitt zum Aufweiten der Spreizhülse auf. Weiter weist die Innenkontur der Spreizhülse einen Bereich mit einer Oberflächenrauhigkeit auf.

Derartige Spreizdübel dienen als Befestigungselemente zur Befestigung eines Gegenstandes an einem Untergrund. Im Untergrund wird ein Bohrloch erstellt und anschliessend der Spreizdübel eingeführt. Beispielsweise mittels einer am Lastangriffsmittel angeordneten Mutter wird der Ankerbolzen entgegen die Setzrichtung gezogen, wobei die Spreizhülse von dem Spreizteil aufgeweitet und dabei der Spreizdübel im Untergrund verankert wird.

Die von dem Spreizdübel erzeugten Spreizkräfte müssen ausreichend gross sein, damit die Übertragung der Betriebslasten des Dübels gewährleistet ist. Andererseits dürfen die Spreizkräfte nicht zu hoch sein, da sich zu hohe Spreizkräfte nachteilig auf die zulässigen Achs- und Randabstände der Spreizdübel auswirken. Durch die geometrische Ausgestaltung des Spreizdübels, z. B. durch die Wahl des Konuswinkels des Spreizteils oder der Abmessungen der Spreizhülse, wird das Spreizverhalten des Spreizdübels beeinflusst. Es werden daher auf die geometrische Ausgestaltung des Spreizdübels ausgelegte Drehmomente festgelegt, bei denen eine bestimmte gewünschte Spreizkraft und damit eine bestimmte Auszuglast erreicht wird.

In der Praxis werden jedoch oftmals höhere als die vordefinierten Drehmomente auf die Spreizdübel aufgebracht, da zumeist keine Drehmomentschlüssel zum Verankern des Spreizdübels im Untergrund verwendet werden. Dies führt dazu, dass die Achs- und Randabstände auf Drehmomente mit einer entsprechenden Sicherheit angegeben werden müssen und dadurch das technische Potential eines Spreizdübels nicht voll ausgeschöpft werden kann. Weiter kann im Extremfall das Spreizteil durch die Spreizhülse hindurchgezogen werden, was zu einem kompletten Versagen der geschaffenen Befestigung führt.

Aus der DE 41 23 353 A1 ist ein Spreizdübel mit einem Ankerbolzen und mit einer Spreizhülse bekannt. Der Ankerbolzen weist an einem ersten Endbereich ein Lastangriffsmittel und an einem zweiten, dem ersten Endbereich gegenüberliegenden Endbereich ein Spreizteil zum Aufweiten der Spreizhülse auf. Das Spreizteil weist einen sich in Richtung des freien Endes des zweiten Endbereichs des Ankerbolzens erweiternden konischen Abschnitt auf. Der Spreizteil ist mit einer zunächst glatten Oberfläche und dann mit einer Oberfläche versehen, die umlaufende Riefen mit sich erhöhender Riefentiefe aufweist. Mit der Zunahme der Reibung beim Verspannen des Spreizdübels wird auch bei hohen Belastungen ein Durchziehen des Spreizteils durch die Spreizhülse verhindert.

Nachteilig an der bekannten Lösung ist, dass die Bearbeitung des Spreizteils einen zusätzlichen, aufwändigen Bearbeitungsvorgang darstellt. Zudem wird durch die umlaufenden Riefen auf dem konischen Abschnitt ein Gleiten der Spreizhülse nicht nur im verspreizten Zustand sondern auch zu Beginn des Spreizvorgangs der Spreizhülse erschwert. Jedoch gerade zu Beginn des Spreizvorgangs sollte die Spreizhülse leicht gleiten können, damit baldmöglichst eine Reibung zwischen der Aussenfläche der Spreizhülse und der Bohrlochwandung wirkt. Ist zu Beginn des Spreizvorgangs bei der Spreizhülse die innere Reibung grösser als die äussere Reibung findet keine Relativverschiebung zwischen der Spreizhülse und dem Spreizteil statt, sondern nur ein Herausziehen des Verankerungsabschnitts beziehungsweise des gesamten Spreizdübels. Des Weiteren weisen die Riefen am Spreizteil nur einen beschränkten Wirkbereich auf. Beim Verspannen des Spreizdübels werden die Riefen mit abgeschabtem Material von der Spreizhülse gefüllt, so dass nach einem gewissen Verspannweg nur noch die Verdickung des Spreizteils bremsend wirkt und somit das Spreizteil beim Aufbringen eines weiteren Drehmomentes, wie bei einem Spreizdübel ohne ein Mittel zur Erhöhung des Durchzugswiderstandes, durch die Spreizhülse hindurchgezogen werden kann.

Zu einem anderen Zweck, nämlich zur Reduktion der Reibung zwischen dem Spreizteil und der Spreizhülse, ist aus der EP 0 790 414 B1 ein gattungsgemässer Spreizdübel bekannt, bei dem die Innenkontur der Spreizhülse einen Bereich mit einer Oberflächenrauhigkeit aufweist. Die erhöhte Oberflächenrauhigkeit wird durch Funkenerosion oder mittels eines Prägewerkzeugs erstellt, das eine funkenerodierte oder geätzte Oberfläche aufweist. Die dadurch resultierende geringere Auflagefläche der Innenkontur der Spreizhülse am Ankerbolzen verringert die Reibung zwischen dem Ankerbolzen und der Spreizhülse beim Setzen des Spreizdübels, wodurch die erforderliche Kraft zum Spreizen der Spreizhülse durch das Spreizteil verringert wird.

Nachteilig an der bekannten Lösung ist, dass bei einem Überschreiten des vordefinierten Drehmomentes beim Setzen des Spreizdübels das Spreizteil durch die Spreizhülse hindurchgezogen werden kann. Zudem können bei diesem Spreizdübel beim Überschreiten des vordefinierten Drehmomentes Spreizkräfte im Untergrund auftreten, die eine Vorgabe der minimalen Achs- und Randabstände mit einer entsprechenden Sicherheit erfordern, so dass das technische Potential des Spreizdübels nicht voll ausgeschöpft werden kann.

Aufgabe der Erfindung ist es, einen Spreizdübel zu schaffen, der einen hohen Widerstand gegen einen Durchzug des Spreizteils durch die Spreizhülse aufweist und der einfach zu fertigen ist.

Die Aufgabe ist durch die Merkmale des unabhängigen Anspruchs gelöst. Vorteilhafte Weiterbildungen sind in den Unteransprüchen dargelegt.

Gemäss der Erfindung steigt die Oberflächenrauhigkeit in Richtung des ersten Endbereichs des Ankerbolzens an.

Überraschenderweise hat sich gezeigt, dass ein solcher Spreizdübel einfach und somit wirtschaftlich herstellbar ist und sich trotzdem die Spreizkräfte eines Spreizdübels vorteilhaft steuern lassen. Beim Verspannen des Spreizdübels kommt der Bereich an der Innenkontur der Spreizhülse mit der ansteigenden Oberflächenrauhigkeit mit der Oberfläche des Spreizteils in Anlage. Aufgrund der zunehmenden Reibung zwischen der Spreizhülse und dem Spreizteil bei einem weiteren Ansteigen des Anzugsdrehmomentes wird die von der Spreizhülse erzeugte und in den Untergrund wirkende Spreizkraft nicht weiter oder gegebenenfalls nur noch geringfügig erhöht. Durch die ansteigende Oberflächenrauhigkeit an der Innenkontur der Spreizhülse wird beim Verspannvorgang des Spreizdübels fortwährend ein neuer Teil des Bereichs mit der ansteigenden Oberflächenrauhigkeit mit dem Spreizteil in Anlage gebracht. Dadurch steht der gesamte Wirkbereich des Bereichs mit der ansteigenden Oberflächenrauhigkeit zur Erhöhung des Durchzugswiderstandes zur Verfügung. Ein Versagen der geschaffenen Befestigung infolge Durchziehens des Spreizteils durch die Spreizhülse ist nahezu verhindert beziehungsweise wird zu höheren Lasten hin verschoben, wobei das technische Potential des Spreizdübels weitgehend ausgeschöpft werden kann.

Die ansteigende Oberflächenrauhigkeit wird vorteilhaft beim Fertigungsvorgang der Spreizhülse ausgebildet. Bei einer als Blechteil ausgebildeten Spreizhülse kann die ansteigende Oberflächenrauhigkeit während dem Stanz-Biegeverfahren erzeugt werden.

Vorzugsweise erstreckt sich der Bereich mit der ansteigenden Oberflächenrauhigkeit von einem dem ersten Endbereich des Ankerbolzens zugewandten Ende der Spreizhülse zumindest bereichsweise in Richtung des freien Endes des zweiten Endbereichs des Ankerbolzens. Dadurch ergibt sich beim Verspreizen des Spreizdübels ein erster Verschiebebereich für die Spreizhülse mit einer geringen Reibung, da die Flächenpressung in diesem Bereich zwischen dem Ankerbolzen und der Spreizhülse gering ist. Der Ankerbolzen weist vorteilhaft eine Einschnürung auf, um welche die Spreizhülse angeordnet ist. Mit einem auf den Innendurchmesser der Spreizhülse abgestimmten Durchmesser des eingeschnürten Abschnitts des Ankerbolzens kann das Spreizverhalten zusätzlich beeinflusst werden. Sobald der Bereich mit der ansteigenden Oberflächenrauhigkeit mit der Oberfläche des Spreizteils in Anlage kommt, nimmt die Reibung zwischen dem Ankerbolzen und der Spreizhülse erheblich zu. Dadurch wird bei einem weiter steigenden Anzugsdrehmoment die Verschiebung des Ankerbolzens gegenüber der Spreizhülse gebremst und der Anstieg der in den Untergrund wirkenden Spreizkraft reduziert.

Bevorzugt ist der Bereich mit der ansteigenden Oberflächenrauhigkeit eine Profilierung, deren Erhebungen den Innenhüllkreis der Spreizhülse überragen. Die Profilierung kann beispielsweise als Riffelung oder Rändelung ausgebildet sein, wobei deren Berge die vorgenannten Erhebungen ausbilden. Ist die Spreizhülse ein Blechteil, kann die Profilierung beispielsweise durch eine Prägung oder eine Rollierung an der Innenkontur der Spreizhülse ausgebildet werden. Alternativ wird zur Schaffung des Bereichs mit der ansteigenden Oberflächenrauhigkeit eine geeignete Beschichtung an der Innenkontur der Spreizhülse vorgesehen.

Vorzugsweise weisen die Erhebungen der Profilierung in Richtung des ersten Endbereichs des Ankerbolzens eine zunehmende Höhe auf, was beim Verspreizen des Spreizdübels zu einem erhöhten Anstieg der Reibung bei einer zunehmenden axialen Verschiebung der Spreizhülse führt.

Bevorzugt verlaufen die Erhebungen der Profilierung ausgerichtet in Richtung des ersten Endbereichs des Ankerbolzens. Infolge dieser Ausrichtung der Erhebungen lässt sich der Anstieg der Reibung bei der zunehmenden axialen Verschiebung der Spreizhülse besonders vorteilhaft steuern und somit ein unerwünschtes Durchziehen des Ankerbolzens durch die Spreizhülse verhindern. Vorteilhaft verlaufen die Erhebungen der Profilierung im Wesentlichen parallel zur Längserstreckung des Ankerbolzens

Die Erfindung wird nachstehend anhand eines Ausführungsbeispieles näher erläutert. Es zeigen:

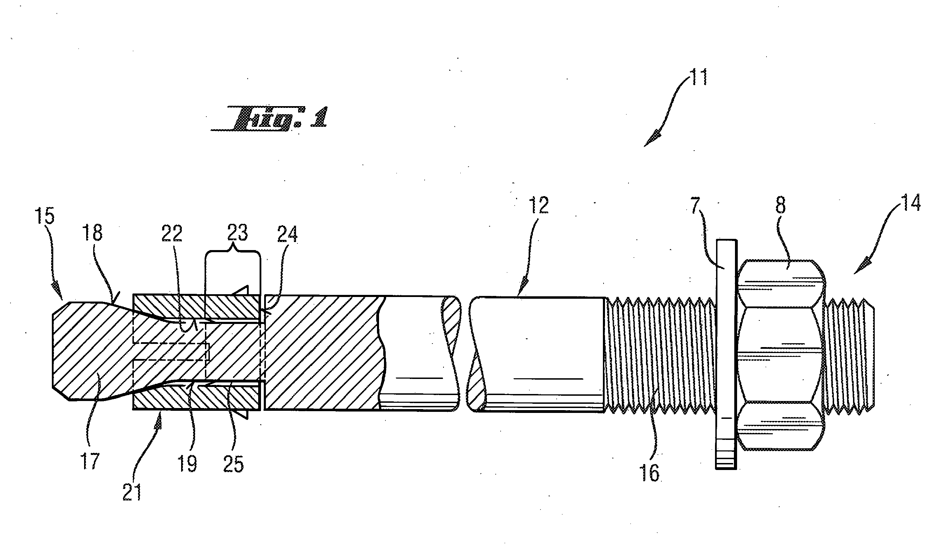

- Fig. 1: Einen Teilschnitt eines erfindungsgemässen Spreizdübels; und

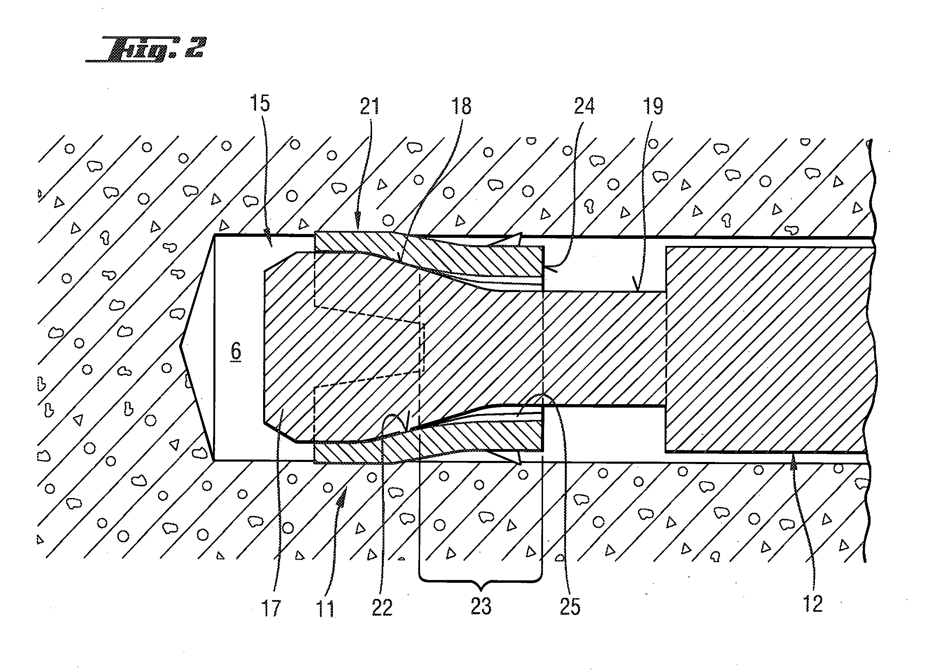

- Fig. 2: einen Detailschnitt des Spreizbereich im gesetzten Zustand des Spreizdübels.

Grundsätzlich sind in den Figuren gleiche Teile mit den gleichen Bezugszeichen versehen.

Der in den Figuren dargestellte Spreizdübel 11 weist einen Ankerbolzen 12 und eine Spreizhülse 21 auf. Der Ankerbolzen 12 weist an einem ersten Endbereich 14 einen Gewindeabschnitt als Lastangriffsmittel 16 und an einem zweiten Endbereich 15 ein Spreizteil 17 zum Aufweiten der Spreizhülse 21 auf. Das Spreizteil 17 ist in diesem Ausführungsbeispiel einteilig an dem Ankerbolzen 12 ausgeformt und weist einen sich in Richtung des freien Endes des zweiten Endbereichs 15 des Ankerbolzens 12 erweiternden konischen Abschnitt 18 auf. An dem Ankerbolzen 12 ist eine Einschnürung 19 vorgesehen, in welcher die Spreizhülse 21 angeordnet ist.

Die Spreizhülse 21 weist an ihrer Innenkontur 22 einen mit dem Spreizteil 17 in Anlage bringbaren Bereich 23 mit einer ansteigenden Oberflächenrauhigkeit auf, der sich von einem dem ersten Endbereich 14 des Ankerbolzens 12 zugewandten Ende 24 der Spreizhülse 21 bereichsweise in Richtung des freien Endes des zweiten Endbereichs 15 des Ankerbolzens 12 erstreckt. Die ansteigende Oberflächenrauhigkeit ist eine Profilierung 25, welche in Richtung des ersten Endbereichs 14 des Ankerbolzens 12 eine zunehmende Höhe aufweist. Die den Innenhüllkreis der Spreizhülse 21 überragenden Erhebungen der Profilierung 25 verlaufen in Richtung des ersten Endbereichs 14, parallel zur Längserstreckung des Ankerbolzens 12.

Der Spreizdübel 11 wird in ein zuvor erstelltes Bohrloch 6 eingeführt und beispielsweise mittels einer auf eine Unterlegscheibe 7 wirkende Mutter 8 verspannt. Dabei verschiebt sich der Ankerbolzen 12 axial in der Spreizhülse 21, welche zwischen dem Spreizteil 17 des Ankerbolzens 12 und der Wandung des Bohrlochs 6 eingeklemmt wird. Der Bereich 23 mit der ansteigenden Oberflächenrauhigkeit kommt dabei mit dem konischen Abschnitt 18 des Spreizteils 17 in Anlage, wobei bei einem weiteren Aufbringen eines Drehmomentes der Reibungswiderstand zwischen der Spreizhülse 21 und dem Spreizteil 17 des Ankerbolzens 12 progressiv ansteigt.

## Patentansprüche

1. Spreizdübel mit einem Ankerbolzen (12) und mit einer Spreizhülse (21), wobei
der Ankerbolzen (12) an einem ersten Endbereich (14) ein Lastangriffsmittel (16) und an einem zweiten Endbereich (15) ein Spreizteil (17) mit einem sich in Richtung des freien Endes des zweiten Endbereichs (15) erweiternden konischen Abschnitt (18) zum Aufweiten der Spreizhülse (21) aufweist, wobei
die Innenkontur (22) der Spreizhülse (21) einen Bereich (23) mit einer Oberflächenrauhigkeit aufweist, **dadurch gekennzeichnet, dass**
die Oberflächenrauhigkeit in Richtung des ersten Endbereichs (14) des Ankerbolzens (12) ansteigt.

2. Spreizdübel nach Anspruch 1, **dadurch gekennzeichnet, dass** sich der Bereich (23) mit der ansteigenden Oberflächenrauhigkeit von einem dem ersten Endbereich (14) des Ankerbolzens (12) zugewandten Ende (24) der Spreizhülse (21) zumindest bereichsweise in Richtung des freien Endes des zweiten Endbereichs (15) des Ankerbolzens (12) erstreckt.

3. Spreizdübel nach Anspruch 1 oder 2, **dadurch gekennzeichnet, dass** der Bereich (23) mit der ansteigenden Oberflächenrauhigkeit eine Profilierung (25) ist, deren Erhebungen den radialen Innenhüllkreis der Spreizhülse (21) überragen.

4. Spreizdübel nach Anspruch 3, **dadurch gekennzeichnet, dass** die Erhebungen der Profilierung (25) in Richtung des ersten Endbereichs (14) des Ankerbolzens (12) eine zunehmende Höhe aufweisen.

5. Spreizdübel nach Anspruch 3 oder 4, **dadurch gekennzeichnet, dass** die Erhebungen der Profilierung (25) in Richtung des ersten Endbereichs (14) des Ankerbolzens (12) ausgerichtet verlaufen.

## Claims

1. Expansion anchor having an anchoring stud (12) and an expansion sleeve (21), the anchoring stud (12) having a load-accepting means (16) in a first end-region (14) and, in a second end-region (15), an expander section (17) which has a conical portion (18), for spreading out the expansion sleeve (21), which becomes wider in the direction of the free end of the second end-region (15), the internal outline (22) of the expansion sleeve (21) having a region (23) having a surface roughness, **characterised in that** the surface roughness increases in the direction of the first end-region (14) of the anchoring stud (12).

2. Expansion anchor according to claim 1, **characterised in that**, at least in a region or regions, the region (23) having the increasing surface roughness extends in the direction of the free end of the second end-region (15) of the anchoring stud (12) from an end (24) of the expansion sleeve (21) facing towards the first end-region (14) of the anchoring stud (12).

3. Expansion anchor according to claim 1 or 2, **characterised in that** the region (23) having the increasing surface roughness is a profiling (25) whose elevations project beyond the radial internal enveloping circle of the expansion sleeve (21).

4. Expansion anchor according to claim 3, **characterised in that** the elevations of the profiling (25) increase in height in the direction of the first end-region (14) of the anchoring stud (12).

5. Expansion anchor according to claim 3 or 4, **characterised in that** the elevations of the profiling (25) extend in the direction of the first end-region (14) of the anchoring stud (12) in an alignment.

## Revendications

1. Cheville à expansion comportant un boulon d'ancrage (12) et une douille d'expansion (21), dans laquelle
le boulon d'ancrage (12) comporte, sur une première zone d'extrémité (14), des moyens d'application de charge (16) et, sur une seconde zone d'extrémité (15), une partie d'expansion (17) ayant une partie conique (18) s'étendant en direction de l'extrémité libre de la seconde zone d'extrémité (15) pour élargir la douille d'expansion (21), dans laquelle
le contour intérieur (22) de la douille d'expansion (21) comporte une zone (23) ayant une rugosité de surface, **caractérisée en ce que**
la rugosité de surface augmente en direction de la première zone d'extrémité (14) du boulon d'ancrage (12).

2. Douille d'expansion selon la revendication 1, **caractérisée en ce que** la zone (23) ayant la rugosité de surface croissante s'étend à partir d'une extrémité (24) de la douille d'expansion (21) dirigée vers la première zone d'extrémité (24), au moins dans certaines zones, en direction de l'extrémité libre de la seconde zone d'extrémité (15) du boulon d'ancrage (12).

3. Douille d'expansion selon la revendication 1 ou 2, **caractérisée en ce que** la zone (23) ayant la rugosité de surface croissante est un profilé (25) dont des élévations font saillie à partir du cercle enveloppant intérieur radial de la douille d'expansion (21).

4. Douille d'expansion selon la revendication 3, **caractérisée en ce que** les élévations du profilé (25) ont une hauteur croissante en direction de la première zone d'extrémité (14) du boulon d'ancrage (12).

5. Douille d'expansion selon la revendication 3 ou 4, **caractérisée en ce que** les élévations du profilé (25) sont orientées en direction de la première zone d'extrémité (14) du boulon d'ancrage (12).
